# EUROPÄISCHE PATENTSCHRIFT

(11) **EP 0 999 962 B1**
(45) Veröffentlichungstag und Bekanntmachung des Hinweises auf die Patenterteilung: **12.06.2002**
(21) Anmeldenummer: 98942650.7
(22) Anmeldetag: 29.07.1998
(51) Int. Cl.: B60T 8/00

(54) **VERFAHREN UND VORRICHTUNG ZUR ERKENNUNG EINER BREMSSITUATION BEI KURVENFAHRT UND MIT MU-SPLIT**
METHOD AND DEVICE FOR DETECTING A BRAKING SITUATION IN A CURVE AND WITH AN MU SPLIT
PROCEDE ET DISPOSITIF PERMETTANT DE DETECTER UNE SITUATION DE FREINAGE DANS UNE COURBE ET COMPORTANT UN ECART MU

(30) Priorität: 31.07.1997 DE 19732998
(43) Veröffentlichungstag der Anmeldung: 17.05.2000
(73) Patentinhaber: Continental Teves AG & Co. oHG, 60488 Frankfurt am Main (DE)
(72) Erfinder: WOYWOD, Jürgen, D-64542 Mörfelden (DE); GRONAU, Ralph, D-35083 Wetter (DE); ROLL, Georg, D-63150 Heusenstamm (DE); WALDBAUER, Dirk, D-65817 Eppstein (DE)
(86) Internationale Anmeldenummer: EP9804725
(87) Internationale Veröffentlichungsnummer: WO9906256

(56) Entgegenhaltungen:
- EP-A- 0 771 707
- EP-A- 0 844 155
- DE-A- 4 222 958
- DE-A- 19 703 668

## Beschreibung

Die vorliegende Erfindung bezieht sich auf ein Giermomentbeeinflussungsverfahren für Fahrzeuge mit einem Antiblockiersystem, bei dem der Bremsdruck in der Bremse zumindest eines Rades beeinflusst wird und bei dem zur Erkennung einer Fahrzeugbremsung bei Kurvenfahrt folgende Schritte durchgeführt werden: Erfassen der Bremsdrücke und/oder deren Änderung in den Bremsen zumindest eines linken und zumindest eines rechten Rades sowie Bestimmen der Kurvenfahrt, Bestimmen zumindest eines kurvenaußenseitigen Rades und zumindest eines kurveninnenseitigen Rades. Die Erfindung bezieht sich außerdem auf eine Vorrichtung zur Durchführung des erfindungsgemäßen Verfahrens.

Ein Giermomentbeeinflussungsverfahren dieser Art ist aus der EP-A-0 771 707 bekannt. Nach dem in diesem Dokument beschriebenen Verfahren wird der Bremsdruck in den einzelnen Radbremsen beim Erkennen von untersteuerndem oder übersteuernden Fahrverhalten mit dem Ziel moduliert, das Untersteuern oder Übersteuern zu kompensieren.

Wie im folgenden noch näher erläutert wird, bezieht sich die vorliegende Erfindung dagegen auf das Überwinden einer besonders gefährlichen Fahrsituation, die sich als Folge einer Kurvenfahrt und einer (ABS-)Regelbremsung auf µ-split mit kurvenaußen geringerem Reibbeiwert als kurveninnen einstellen kann.

Da bei der vorliegenden Beschreibung häufig auf physikalische Größen und Räder am Fahrzeug vorne oder hinten, links oder rechts, kurveninnen oder kurvenaußen Bezug genommen wird, werden diese Größen jeweils durch die Bezugsbuchstaben v und h, 1 und r, i und a, gegebenenfalls jeweils als Index, unterschieden. Fehlen diese Bezugsbuchstaben, kommt es im jeweiligen Zusammenhang auf die angesprochenen Unterscheidungen nicht an.

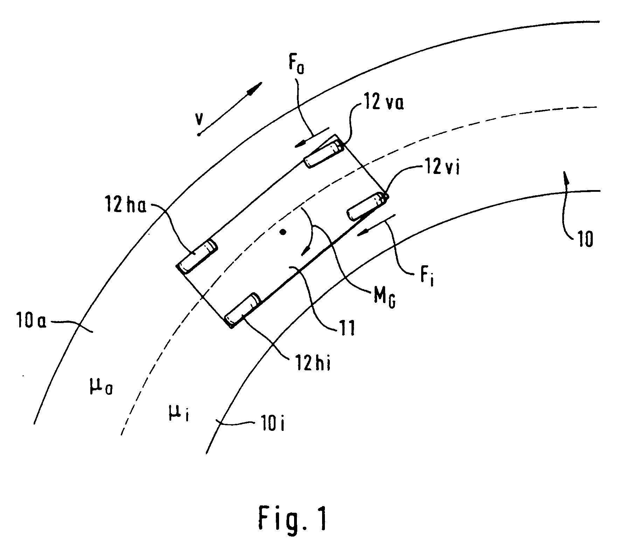

Fig. 1 zeigt eine Fahrbahn 10, die von einem Fahrzeug 11 in Richtung des Pfeils v, der eine bestimmte Fahrzeuggeschwindigkeit v symbolisiert, befahren wird. Die Fahrbahn weist einen von den inneren Rädern 12i des Fahrzeugs befahrenen inneren Bereich 10i und einen von den äußeren Rädern 12a des Fahrzeugs 11 befahrenen äußeren Bereich 10a auf. Die Trennung wird durch die gestrichelte Linie angedeutet (die nicht die Mittellinie einer Straße sein soll!). Während der Kurvenfahrt sind die äußeren Räder 12a üblicherweise stärker belastet als die inneren Räder 12i, weil durch die am über der Fahrbahn 10 gelegenen Fahrzeugschwerpunkt angreifende Zentrifugalkraft ein Rollmoment um die Längsachse des Fahrzeugs erzeugt wird, das durch eine erhöhte Kraft auf den äußeren Rädern 12a zu kompensieren ist. Wenn in Kurven dann so stark gebremst wird, daß das Antiblockiersystem (ABS) eingreift, führt dies dazu, daß aufgrund der stärkeren Radlast außen üblicherweise die äußeren Räder 12a eine geringere oder allenfalls gleich große Bremsdruckabsenkung erfahren wie die jeweils zugehörigen inneren Räder 12i. Gleichwohl wurde bei kritischen Betriebszuständen unter ABS ein Ausbrechen des Fahrzeugs dergestalt beobachtet, dass es sich kurveneinwärts dreht.

Aufgabe der Erfindung ist es, ein Giermomentbeeinflussungsverfahren und eine Vorrichtung zur Erkennung und Überwindung des obigen kritischen Fahrzustands zu schaffen.

Diese Aufgabe wird mit den Merkmalen der unabhängigen Ansprüche gelöst. Abhängige Ansprüche sind auf bevorzugte Ausführungsformen der Erfindung gerichtet.

Es kann der Fall auftreten, daß der Reibwert µ zwischen Rad 12 und Fahrbahn 10 auf äußeren Fahrbahnteilen 10a kleiner ist als der Reibwert zwischen kurveninnenseitigen Rädern 12i und Fahrbahninnenseite 10i. Dies kann dazu führen, daß ein Außenrad 12a früher blockiert als ein Innenrad 12i, so daß dementsprechend das ABS den Bremsdruck pₐ für ein außen gelegenes Rad 12a stärker absenkt als für ein innen gelegenes Rad 12i, um ein Blockieren des äußeren Rads zu verhindern. Dies führt dazu, daß die Bremskraft Fₐ am äußeren

Rad schwächer ist als die Bremskraft Fᵢ am Innenrad 12i. Dadurch entsteht ein Giermoment M_{G} um die Hochachse des Fahrzeugs, das anders als im herkömmlichen Fall nicht der sowieso schon vorhandenen Fahrzeugdrehung entgegengerichtet ist, sondern in die gleiche Richtung dreht, so daß die Gefahr besteht, daß sich das Fahrzeug veranlaßt durch das Giermoment M_{G} aufgrund der höheren Bremskraft innen kurveneinwärts zu drehen beginnt.

Bezugnehmend auf die Figuren werden nun vorteilhafte Ausführungsformen der Erfindung beschrieben, es zeigen:
- Fig. 1: eine Darstellung physikalischer Verhältnisse, wie sie bei einer Bremsung in der Kurve auftreten können,
- Fig. 2: eine erfindungsgemäße Ausführungsform einer Erkennungsvorrichtung, und
- Fig. 3: eine erfindungsgemäße Ausführungsform einer Beeinflussungsvorrichtung.

Erfindungsgemäß wird zunächst bestimmt, ob es sich um eine Kurvenfahrt handelt und welche Räder dabei die kurveninnenseitigen bzw. kurvenaußenseitigen Räder sind. Dies kann durch die Bestimmungseinrichtung 22 geschehen, die beispielsweise ein Lenkwinkelsensor, eine Querbeschleunigungserfassungseinrichtung oder ähnliches sein kann. In Fig. 1 würde die Bestimmungsein-richtung 22 beispielsweise feststellen, daß die Räder 12vi bzw. 12hi kurveninnenseitige Räder und die Räder 12va und 12ha kurvenaußenseitige Räder sind.

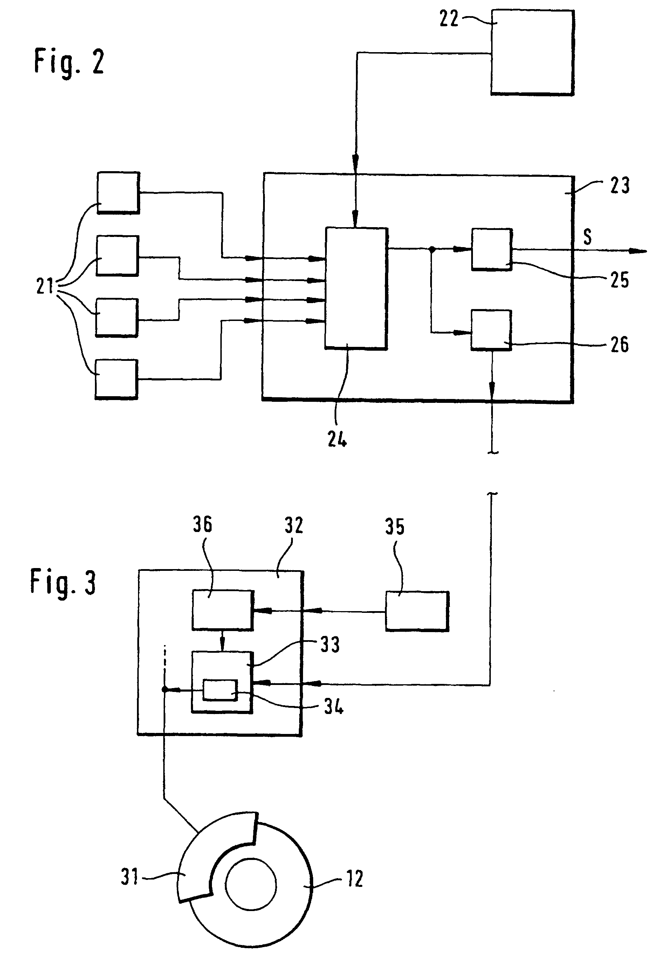

Es werden dann die Bremskraft bzw. deren Verringerung zumindest eines bestimmten kurvenaußenseitigen Rads mit der Bremskraft bzw. deren Verringerung zumindest eines bestimmten kurven-innenseitigen Rads verglichen. Die für den Vergleich erforderlichen Signale für Bremskraft bzw. deren Verringerung können auf verschiedene Weise gewonnen werden. Fig. 2 zeigt eine Erfassungseinrichtung 21, die die Bremsdrücke bzw. deren Verringerungen für jedes Rad erfaßt. Die Erfassungseinrichtung 21 kann damit aus Sensoren bestehen, die den tatsächlich vorhandenen Bremsdruck in je einer Bremse eines Rades messen. Die Erfassungseinrichtung 21 kann aber auch ein Abgriff bestimmter Signale aus einem ABS-System oder aus einem Bremsassistenten sein. Die Erfassungseinrichtung 21 kann auch andere physikalische Größen erfassen, die ein Maß für die Bremskraft der betrachteten Räder 12 sind.

Beim obengenannten Vergleich kann sich ergeben, daß aufgrund der Einwirkung von ABS die Bremskraft an einem kurvenaußenseitigen Rad 12a kleiner ist bzw. stärker abgesenkt wird als die Bremskraft an einem kurveninnenseitigen Rad 12i. Dieser Fall ist ein Anzeichen für die eingangs beschriebene kritische Situation, so daß bei der oben erwähnten Feststellung ein Erkennungssignal S ausgegeben bzw. geeignete Gegenmaßnahmen ausgelöst werden. Dies kann durch geeignete Erzeugungseinrichtungen 25, 26 geschehen.

Da die eingangs beschriebene kritische Situation (ABS-Eingriff bei Kurvenbremsung mit geringerem Reibwert außen) zu einem kurveneinwärtsdrehenden Giermoment M_{G} um die Fahrzeughochachse führt, ist es eine geeignete Gegenmaßnahme, die Bremskraft an einem kurveninnenseitigen Rad 12i zu verringern. Dadurch nimmt die verzögernde Kraft Fᵢ an der Fahrzeuginnenseite ab, so daß auch das kurveneinwärtsdrehende Giermoment M_{G} abnimmt und die Gefahr des Eindrehens des Fahrzeugs kleiner wird, oder das Giermoment wird sogar eliminiert.

Das Erniedrigen der Bremskraft eines kurveninnenseitigen Rads 12i kann über Verringerung bzw. Herabsetzung des Bremsdrucks p, in der Bremse 31 dieses Rads 12i erfolgen. Dies kann in einer Verringerungseinrichtung 33 geschehen. Vorzugsweise wird die Bremskraft so verringert, daß der Bremskraftgradient bzw. die Änderung pro Zeiteinheit unter einem bestimmten oder nach Maßgabe von Betriebszuständen des Fahrzeugs bestimmbaren Wert bleibt. Durch eine Begrenzungseinrichtung 34 kann dies sichergestellt werden.

Außerdem kann die Bremsdruckabsenkung unterbleiben, wenn nur leichte Kurven durchfahren werden. Dies äußert sich in einer geringen Querbeschleunigung (aufgrund der Zentrifugalkraft und der Wagenmasse). Somit kann eine Erfassungseinrichtung 35 zum Erfassen der Querbeschleunigung des Fahrzeugs vorgesehen sein sowie eine Verhinderungseinrichtung 36, die die Verringerung der Bremskraft verhindert, wenn die Querbeschleunigung unter einem bestimmten oder bestimmbaren Wert liegt.

Bisher sind Verfahren und Vorrichtungen beschrieben, bei denen die Verhinderungseinrichtung 36 in der Giermomentbeein-flussungsvorrichtung vorgesehen sind. Die Verhinderungs-vorrichtung kann aber auch in der Erkennungsvorrichtung vorgesehen sein und ein entsprechendes Erkennungssignal bzw. das Auslösen von Gegenmaßnahmen unterdrücken. Für die zugehörigen Verfahren gilt das entsprechende.

Beim Vergleich im erfindungsgemäßen Erkennungsverfahren werden vorzugsweise die Werte der Räder an einer Achse, insbesondere der Räder 12v an der Vorderachse, miteinander verglichen. Der Eingriff zur Beeinflussung des Giermoments erfolgt vorzugsweise am vorderen inneren Rad 12vi. Der erfindungsgemäße Vergleich kann auch für beide Achsen parallel vorgenommen werden, wobei die beschriebenen Maßnahmen nur dann ergriffen werden, wenn an beiden Achsen das beschriebene Kriterium vorliegt.

## Patentansprüche

1. Giermomentbeeinflussungsverfahren für Fahrzeuge mit einem Antiblockiersystem (ABS),
bei dem der Bremsdruck in der Bremse (31) zumindest eines Rades (12) beeinflusst wird und bei dem zur Erkennung einer Fahrzeugbremsung bei Kurvenfahrt folgende Schritte durchgeführt werden:
- Erfassen der Bremsdrücke und/oder deren Änderung in den Bremsen (31) zumindest eines linken und zumindest eines rechten Rades (12),
- Bestimmen der Kurvenfahrt und
- Bestimmen zumindest eines kurvenaußenseitigen Rades (12a) und zumindest eines kurveninnenseitigen Rades (12i), **dadurch gekennzeichnet,**
- **dass** ein die Bremskraft oder deren Verringerung darstellendes Signal zumindest eines bestimmten kurvenaußenseitigen Rades (12a) mit einem die Bremskraft oder deren Verringerung darstellenden Signal zumindest eines bestimmten kurveninnenseitigen Rades (12i) verglichen wird,
- **dass** ein Erkennungssignal (S) erzeugt wird und/oder eine geeignete Maßnahme veranlasst wird, wenn aufgrund einer Einwirkung des Antiblockiersystems (ABS) die Bremskraft zumindest eines kurvenaußenseitigen Rades (12a) kleiner ist und/oder stärker verringert wird als die Bremskraft zumindest eines kurveninnenseitigen und
- **dass** bei Erkennung einer Fahrbahn (10), deren Reibwert(µ) an einem kurvenaußenseitigen Rad (12a) kleiner ist als an einem kurveninnenseitigen Rad (12i)
- in Reaktion auf das Erkennungssignal (S) und/oder als geeignete Maßnahme die Bremskraft in einer Bremse (31) eines kurveninnenseitigen Rades (12i) verringert wird.

2. Verfahren nach Anspruch 1, **dadurch gekennzeichnet, dass** die Bremskraft für das kurveninnenseitigen Vorderrad (12vi) verringert wird.

3. Verfahren nach Anspruch 2, **dadurch gekennzeichnet, dass** der Betrag des Bremskraftgradienten am kurveninnenseitigen Vorderrad (12vi) unter einem bestimmten oder bestimmbaren Wert gehalten wird.

4. Verfahren nach einem der Ansprüche 1 bis 3, **dadurch gekennzeichnet, dass** die Verringerung der Bremskraft des zumindest einen kurveninnenseitigen Rades (12i) unterbleibt, wenn die Querbeschleunigung unter einem bestimmten Wert liegt.

5. Vorrichtung zur Durchführung des Verfahrens nach einem mehreren der Ansprüche 1 bis 4 für ein Kraftfahrzeug mit einem Antiblockiersystem (ABS),
mit einer Einrichtung (32) zum Beeinflussen der Bremskraft der Bremse (31) zumindest eines Rades (12) und mit einer Erkennungsvorrichtung zur Erkennung einer Fahrzeugbremsung bei Kurvenfahrt auf einer Fahrbahn (10), bei der der Reibwert (µ) der Fahrbahn (10) an einem kurvenaußenseitigen Rad (12a) kleiner ist als an einem kurveninnenseitigen Rad (12i), wobei die Erkennungseinrichtung
- eine ersten Erfassungseinrichtung (21) zum Erfassen der Bremskräfte (p) und/oder deren Änderung (Δp) in den Bremsen zumindest eines linken und zumindest eines rechten Rades (12l, 12r) und
- eine Bestimmungseinrichtung (22) zum Bestimmen einer Kurvenfahrt und zumindest eines kurvenaußenseitigen und zumindest eines kurveninnenseitigen Rades (12a, 12i) aufweist, **gekennzeichnet**
- **durch** eine Vergleichseinrichtung (24) zum Vergleichen der Bremskraft (pₐ) oder der Bremskraftverringerung (Δpₐ) zumindest eines kurvenaußenseitigen Rades (12a) mit der Bremskraft (pᵢ) oder der Bremskraftverringerung (Δpᵢ) zumindest eines kurveninnenseitigen Rades (12i),
- **durch** eine Erzeugungseinrichtung (25, 26) zum Erzeugen eines Erkennungssignals (S) und/oder zum Veranlassen geeigneter Maßnahmen, wenn die Bremskraft (pₐ) zumindest eines kurvenaußenseitigen Rades (12a) kleiner ist und/oder stärker verringert wird als die Bremskraft (pᵢ) zumindest eines kurveninnenseitigen Rades (12i und
- **durch** eine Verringerungseinrichtung (33), die als geeignete Maßnahme bzw. auf das Erkennungssignal (S) hin die Bremskraft in einer Bremse (31) eines kurveninnenseitigen Rades (12i) verringert.

6. Vorrichtung nach Anspruch 5, **dadurch gekennzeichnet, dass** die Verringerungseinrichtung (33) die Bremskraft für das kurveninnenseitigen Vorderrad (12vi) verringert.

7. Vorrichtung nach Anspruch 5 oder 6, **gekennzeichnet durch** eine Begrenzungseinrichtung (34), die den Betrag des Bremskraftgradienten unter einem bestimmten oder bestimmbaren Wert hält.

8. Vorrichtung nach einem der Ansprüche 5 bis 7, **gekennzeichnet durch**
- eine zweite Erfassungseinrichtung (35) zum Erfassen der Querbeschleunigung des Fahrzeugs, und
- eine Verhinderungseinrichtung (36), die die Verringerung der Bremskraft am kurveninnenseitigen Rad (12i) verhindert, wenn die Querbeschleunigung unter einem bestimmten Wert liegt.

## Claims

1. Method of influencing the yaw torque for vehicles equipped with an anti-lock system (ABS), wherein the braking pressure in the brake (31) of at least one wheel (12) is influenced and wherein for detecting braking of a vehicle during cornering the following steps are carried out:
- detecting the braking pressures and/or their variation in the brakes (31) of at least one left and at least one right wheel (12),
- determining a cornering maneuver and
- determining at least one wheel (12o) on the outside of a curve and at least one wheel (12i) on the inside of the curve,
**characterized in that**
- a signal representative of the brake force or its reduction of at least one determined wheel (12o) on the outside of a curve is compared with a signal representative of the brake force or its reduction of at least one determined wheel (12i) on the inside of the curve,
- a detection signal (S) is generated and/or an appropriate measure is initiated when the brake force of at least one wheel (12o) on the outside of a curve is lower and/or reduced to a greater degree than the brake force of at least one wheel on the inside of the curve due to the effect of the anti-lock system (ABS), and
- upon detection of a roadway (10) whose coefficient of friction on a wheel (12o) on the outside of a curve is lower than that on a wheel (12i) on the inside of the curve,
- in reaction to the detection signal (S) and/or as an appropriate measure the brake force in a wheel (31) of a wheel (12i) on the inside of the curve is reduced.

2. Method as claimed in claim 1,
**characterized** and in that the brake force for the wheel (12fi) on the inside of a curve is reduced.

3. Method as claimed in claim 2,
**characterized in that** the magnitude of the brake force gradient on the wheel (12fi) on the inside of a curve is kept below a determined or determinable value.

4. Method as claimed in any one of claims 1 to 3,
**characterized in that** the reduction of the brake force of the at least one wheel (12i) on the inside of a curve remains undone when the transverse acceleration is below a determined value.

5. Device for implementing the method as claimed in any one or more of claims 1 to 4 for an automotive vehicle equipped with an anti-lock system (ABS),
including a device (32) for influencing the brake force of the brake (31) of at least one wheel (12) and a detection device for detecting braking of a vehicle during cornering on a road surface (10) where the coefficient of friction (µ) of the road surface (10) on a wheel (120) on the outside of a curve is lower than on a wheel (12i) on the inside of the curve, wherein the detection device includes
- a first sensing device (21) for sensing the brake forces (p) and/or their variation (Δp) in the brakes of at least one left and at least one right wheel (12l, 12r),
- a determining device (22) for determining at least one wheel (12o, 12i) on the outside of a curve and at least one wheel on the inside of the curve,
**characterized by**
- a comparison device (24) for comparing the brake force (pₒ) or the brake force reduction (Δpₒ) of at least one wheel (12o) on the outside of a curve with the brake force (pᵢ) or the brake force reduction (Δpᵢ) of at least one wheel (12i) on the inside of the curve,
- a generating device (25, 26) for generating a detection signal (S) and/or initiating appropriate measures when the brake force (pₒ) of at least one wheel (12o) on the outside of a curve is lower and/or reduced to a greater degree than the brake force (pᵢ) of at least one wheel (12i) on the inside of the curve, and
- a reduction device (33) which reduces the brake force in a brake (31) of a wheel (12i) on the inside of a curve as an appropriate measure and/or on command of the detection signal (S).

6. Device as claimed in claim 5,
**characterized in that** the reduction device (33) reduces the brake force for the front wheel (12fi) on the inside of a curve.

7. Device as claimed in claim 5 or claim 6,
**characterized by** a limiting device (34) which keeps the magnitude of the brake force gradient below a determined or determinable value.

8. Device as claimed in any one of claims 5 to 7,
**characterized by**
- a second sensing device (35) for sensing the transverse acceleration of the vehicle, and
- a prevention device (36) which prevents the reduction of the brake force of the wheel (12fi) on the inside of the curve when the transverse acceleration is below a determined value.

## Revendications

1. Procédé pour intervenir sur le couple d'embardée pour véhicules comportant un système antiblocage (ABS),
dans lequel la pression de freinage dans le frein (31) d'au moins une roue (12) est influencée et dans lequel, pour détecter un freinage du véhicule en courbe, on exécute les étapes suivantes :
- détection des pressions de freinage et/ou de leur variation dans les freins (31) d'au moins une roue gauche et d'au moins une roue droite (12),
- détermination de la conduite en courbe, et
- détermination d'au moins une roue côté extérieur de la courbe (12a) et d'au moins une roue côté intérieur de la courbe (12i), **caractérisé**
- **en ce qu'**un signal représentant la force de freinage ou sa réduction d'au moins une roue déterminée côté extérieur de la courbe (12a) est comparé à un signal représentant la force de freinage ou sa réduction d'au moins une roue déterminée côté intérieur de la courbe (12i),
- **en ce qu'**un signal de détection (S) est produit et/ou un moyen approprié est déclenché si, en raison de l'action du système antiblocage (ABS), la force de freinage d'au moins une roue côté extérieur de la courbe (12a) est inférieure et/ou est moins réduite que la force de freinage d'au moins une roue côté intérieur de la courbe, et
- **en ce que** dans le cas où est détectée une chaussée (10) dont le coefficient de friction (µ) sur une roue côté extérieur de la courbe (12a) est inférieur à celui sur une roue côté intérieur de la courbe (12i), en réaction au signal de détection (S) et/ou en tant que moyen approprié, la force de freinage est réduite dans un frein (31) d'une roue côté intérieur de la courbe (12i).

2. Procédé selon la revendication 1, **caractérisé en ce que** la force de freinage est réduite pour la roue avant côté intérieur de la courbe (12vi).

3. Procédé selon la revendication 2, **caractérisé en ce que** la valeur du gradient de la force de freinage sur la roue avant côté intérieur de la courbe (12vi) est maintenue sous une valeur déterminée ou qui peut être déterminée.

4. Procédé selon l'une des revendications 1 à 3, **caractérisé en ce que** la réduction de la force de freinage de la ou des roues côté intérieure de la courbe (12i) n'intervient pas si l'accélération transversale se situe au-dessous d'une valeur déterminée.

5. Dispositif pour la mise en oeuvre du procédé selon une ou plusieurs des revendications 1 à 4 pour un véhicule automobile comportant un système antiblocage (ABS),
comportant un dispositif (32) adapté pour intervenir sur la force de freinage du frein (31) d'au moins une roue (12) et comportant un dispositif de détection pour détecter un freinage du véhicule en courbe sur une chaussée (10), dans lequel le coefficient de friction (µ) de la chaussée (10) sur une roue côté extérieur de la courbe (12a) est inférieur à celui sur une roue côté intérieur de la courbe (12i), le dispositif de détection comportant :
- un premier dispositif de détection (21) pour détecter les forces de freinage (p) et/ou leur variation (Δp) dans les freins d'au moins une roue gauche et d'au moins une roue droite (12l, 12r), et
- un dispositif de détermination (22) pour déterminer une conduite en courbe et au moins une roue côté extérieur de la courbe (12a) et au moins une roue côté intérieur de la courbe (12i), **caractérisé**
- **par** un dispositif de comparaison (24) pour comparer la force de freinage (pₐ) ou la réduction de la force de freinage (Δpₐ) d'au moins une roue côté extérieur de la courbe (12a) à la force de freinage (pᵢ) ou à la réduction de la force de freinage (Δpᵢ) d'au moins une roue côté intérieur de la courbe (12i),
- par un dispositif générateur (25, 26) pour générer un signal de détection (S) et/ou pour déclencher des moyens appropriés lorsque la force de freinage (pₐ) d'au moins une roue côté extérieur de la courbe (12a) est inférieure et/ou est réduite plus fortement que la force de freinage (pᵢ) d'au moins une roue côté intérieur de la courbe (12i), et
- par un dispositif de réduction (33) qui, en tant que moyen approprié ou à la suite du signal de détection (S), réduit la force de freinage dans un frein (31) d'une roue côté intérieur de la courbe (12i).

6. Dispositif selon la revendication 5, **caractérisé en ce que** le dispositif de réduction (33) réduit la force de freinage pour la roue avant côté intérieur de la courbe (12vi).

7. Dispositif selon la revendication 5 ou 6, **caractérisé par** un dispositif de limitation (34) qui maintient la valeur du gradient de la force de freinage au-dessous d'une valeur déterminée ou qui peut être déterminée.

8. Dispositif selon l'une des revendications 5 à 7, **caractérisé par**
- un deuxième dispositif de détection (35) pour détecter l'accélération transversale du véhicule, et
- un dispositif d'interdiction (36) qui interdit la réduction de la force de freinage sur la roue côté intérieur de la courbe (12i), lorsque l'accélération transversale se situe au-dessous d'une valeur déterminée.
